(19) Europäisches Patentamt
European Patent Office
Office européen des brevets

(11) **EP 4 501 879 A1**

(12) **EUROPEAN PATENT APPLICATION**
published in accordance with Art. 153(4) EPC

(43) Date of publication:
**05.02.2025   Bulletin 2025/06**

(21) Application number: 23774888.4

(22) Date of filing: **20.03.2023**

(51) International Patent Classification (IPC):
*C04B 7/02* (2006.01)        *C04B 14/04* (2006.01)
*C04B 14/28* (2006.01)       *C04B 18/08* (2006.01)
*C04B 18/14* (2006.01)       *C04B 22/14* (2006.01)
*C04B 28/04* (2006.01)

(52) Cooperative Patent Classification (CPC):
**C04B 7/02; C04B 14/04; C04B 14/28; C04B 18/08;
C04B 18/14; C04B 22/14; C04B 28/04**

(86) International application number:
**PCT/JP2023/010955**

(87) International publication number:
**WO 2023/182293 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  25.03.2022   JP 2022049398

(71) Applicant: TOKUYAMA CORPORATION
**Yamaguchi 745-8648 (JP)**

(72) Inventors:
• **OTA, Masami**
  **Shunan-shi, Yamaguchi 745-8648 (JP)**
• **CHABAYASHI, Takashi**
  **Shunan-shi, Yamaguchi 745-0053 (JP)**

(74) Representative: **Kuhnen & Wacker**
**Patent- und Rechtsanwaltsbüro PartG mbB
Prinz-Ludwig-Straße 40A
85354 Freising (DE)**

(54) **PORTLAND CEMENT CLINKER, CEMENT COMPOSITION AND METHOD FOR PRODUCING PORTLAND CEMENT CLINKER**

(57)    A cement clinker baked at a lower temperature than conventional cement clinkers, produced from a mixture including more wastes, having an easy baking characteristic and good strength development is provided. The cement clinker has a total content of $C_3A$ and $C_4AF$ of not less than 22 mass%; a $C_3S$ content of not less than 60 mass%; an iron modulus of not more than 1.3, calculated according to Bogue's formulae and has a BaO content of not less than 0.05mass% and less than 0.7 mass%.

EP 4 501 879 A1

**Description**

Field of the Invention

This invention relates to a novel cement clinker, cement composition, and method for manufacturing the cement clinker. In detail, this invention relates to the cement clinker and cement composition that are easy to bake and show good cement strength development, in compositions suitable for easy baking at lower temperatures than conventional ones.

Background Art

The cement industry is a mass-production and mass-consumption type industry, and resource and energy conservation are the most important issues in the cement industry, due to recent environmental problems such as $CO_2$ emissions. For example, Portland cement, the most mass-produced cement, requires clinker made by baking raw materials adjusted to a predetermined chemical composition at a high temperature of 1450 degree Celsius to 1550 degree Celsius. The baking process is the most energy-intensive process. In other words, if the clinker baking temperature is reduced, energy consumption is reduced. In order to reduce the clinker baking temperature, it is known to increase $C_4AF$ ($4CaO, Al_2O_3, Fe_2O_3$), the main clinker mineral, as clinker baked at low temperatures (Patent Document 1).

Effective utilization of wastes and by-products is also an important issue from the viewpoint of resource recycling. Taking advantage of the characteristics of the cement industry and cement manufacturing facilities, the effective use or treatment of waste as raw materials or thermal energy sources during cement production enables the safe and mass disposal of waste and by-products. Many wastes and by-products have a high $Al_2O_3$ content, and in systems where $C_4AF$ is increased, the $Al_2O_3$ content of the cement clinker will be higher than that of conventional Portland cement clinker. Therefore, more waste and by-products are used. In this respect, the low-temperature baked clinker (hereinafter referred to simply as low-temperature baked clinker) described in Patent Document 1 is superior.

Cement clinker with more $C_3A$ ($3CaO-Al_2O_3$) and $C_4AF$ contents among clinker minerals has an advantage in that it can process more waste and by-products containing these components because it has more $Al_2O_3$ and $Fe_2O_3$ contents (e.g., Patent Document 2).

When waste and by-products are utilized, components of the waste and by-products are brought into the cement clinker. Not only CaO, $SiO_2$, $Al_2O_3$, and $Fe_2O_3$, the major components of cement clinker, but also other small amount components affect the difficulty of clinker baking, the actual mineral composition, and the physical properties of cement. Therefore, proper control of the small amount components is required. For example, the JIS standard (JIS R 5210) related to Portland cement specifies the amount of magnesium oxide, total alkali, and chloride ions. In addition to this, the influence of those small amount components has also been considered to increase the use of waste and by-products. For example, it has been reported that f-CaO increases linearly with increasing $P_2O_5$ content of cement clinker and that easy baking is worsened (Non-Patent Document 1).

Prior art references

Patent Document

|  |  |
|---|---|
| Patent Document 1: | JP2012-224504A |
| Patent Document 2: | JP2004-352515A |

Non-patent document

Non-Patent Document 1: Muneaki Kanaya, et al., Cement and Concrete, Vol. 53, p.p. 10-15 (1999)

Summary of the Invention

Problems to be solved by this invention

Low-temperature baked clinker is baked at low temperatures and can use more waste containing $Al_2O_3$ and $Fe_2O_3$. However, if the easy baking characteristic is deteriorated by small amount components contained in wastes and by-products, it leads to an increase in baking temperature. It is meaningless if cement properties, such as strength development, are reduced due to the small amount components. The purpose of this invention is to provide cement clinker that can utilize a large amount of waste and by-products and maintain both easy baking characteristic and good cement strength development.

The inventors have made a diligent study in order to solve the above problems. As a result, a low-temperature baked cement clinker with the BaO content adjusted such that not less than 0.05 and not more than 0.7 mass% has the same easy characteristic of baking and cement strength development as the low-temperature baked cement clinker containing no or little BaO (hereinafter referred to simply as "low-temperature baked clinker containing little or no BaO").

A Portland cement clinker according to a first aspect of the invention has a total content of $C_3A$ and $C_4AF$ of not less than 22 mass%; a $C_3S$ content of not less than 60 mass%, an iron modulus (I.M.) of not more than 1.3, calculated according to Bogue's formulae; and a BaO content of not less than 0.05 mass% and less than 0.7 mass%. It is preferred that $C_4AF$ content is not less than 15 mass%. The total content of $C_3S$ and $C_2S$ is preferred to be not less than 69 mass%.

A cement composition according to a second aspect of the invention comprises: the cement clinker having a total content of $C_3A$ and $C_4AF$ of not less than 22 mass%; a $C_3S$ content of not less than 60 mass%, an iron modulus (I.M.) of not more than 1.3, calculated according to Bogue's formulae; and a BaO content of not less than 0.05 mass% and less than 0.7 mass%; and gypsum. It is preferred that the cement composition further contains one or more of the following admixture materials selected from the group consisting of blast furnace slag, siliceous admixture, fly ash, and limestone.

A production method of Portland cement clinker according to a third aspect opf the invention comprises: mixing a CaO source; a $SiO_2$ source; an $Al_2O_3$ source; a $Fe_2O_3$ source; and a BaO source into a mixture such that the Portland cement clinker after baking has a composition, calculated according to Bogue's formulae, of a total content of $C_3A$ and $C_4AF$ of not less than 22 mass%, a $C_3S$ content of not less than 60 mass%, an iron modulus (I.M.) of not more than 1.3, and has a BaO content of not less than 0.05 mass% and less than 0.7 mass%; and baking the mixture at a temperature of not less than 1300 degree Celsius and less than 1400 degree Celsius. The baking temperature is preferably not less than 1300 degree Celsius and not more than 1380 degree Celsius.

Preferably, the Portland cement clinker has the total content of $C_3A$ and $C_4AF$ of not less than 22 mass% and not more than 32 mass%; the $C_3S$ content of not less than 60 mass% and not more than 70 mass%; the $C_2S$ content of not less than 3% and not more than 18 mass%; the total content of $C_3A$, $C_4AF$, $C_3S$, and $C_2S$ being not more than 100 mass percent, and the BaO content being not less than 0.25 mass% and not more than 0. 65 mass%. The BaO content is preferably not less than 0.25 mass% and not more than 0.5 mass%; when the BaO content is not less than 0.25 mass% and not more than 0.5 mass%, the compressive strength of the mortar is obtained early and the long-term strength is also high (see Table 3).

The descriptions of Portland cement clinker in this specification apply also to the production method and the cement compositions using the cement clinker. When % is used with respect to composition, it is, in principle, mass percent. When the composition is specified such as from A% to B%, the lower limit A and the upper limit B are included.

Advantageous Effects of the Invention

The cement clinker of the present invention is baked at lower temperatures than conventional cement clinker and shows easy baking and cement strength development compatible with the low-temperature baked clinker with little or no BaO, while with increased use of waste materials during production.

Means for Carrying out the Invention

The $C_3A$, $C_4AF$, $C_3S$ and $C_2S$ contents in the Portland cement clinker (hereinafter simply referred to as "cement clinker") according to the present invention are determined by Bogue's formulae.

Bogue's formulae have been used in conjunction with the moduli and various indices to calculate the approximate major mineral composition using major chemically analyzed values and have been well known to those skilled in the art.

$$C_3S \text{ content} = (4.07 \text{ x CaO}) - (7.60 \text{ x } SiO_2) - (6.72 \text{ x } Al_2O_3) - (1.43 \text{ x } Fe_2O_3)$$

$$C_2S \text{ content} = (2.87 \text{ x } SiO_2) - (0.754 \text{ x } C_3S)$$

$$C_3A \text{ content} = (2.65 \text{ x } Al_2O_3) - (1.69 \text{ x } Fe_2O_3)$$

$$C_4AF \text{ content} = 3. 04 \text{ x } Fe_2O_3$$

The iron modulus (I.M.), the hydraulic modulus (H.M.), silicon modulus (S.M.), activity index (A.I.), and lime saturation degree (L.S.D.), are determined using the contents of major chemical components and have been utilized for the production control of cement clinkers together with other moduli and indices. The calculation method of iron modulus will be described below along with other moduli.

$$\text{Hydraulic Modulus (H.M.)} \quad = CaO / (SiO_2 + Al_2O_3 + Fe_2O_3)$$

$$\text{Silicon Modulus (S.M.)} \quad = SiO_2 / (Al_2O_3 + Fe_2O_3)$$

$$\text{Iron Modulus (I.M.)} \quad = Al_2O_3 / Fe_2O_3$$

$$\text{Activity Index (A.I.)} \quad = SiO_2 / Al_2O_3$$

$$\text{Lime Saturation Degree (L.S.D.)} \quad = CaO / (2.8 \text{ x } SiO_2 + 1.2 \text{ x } Al_2O_3 + 0.65 \text{ x } Fe_2O_3)$$

The above CaO, $SiO_2$, $Al_2O_3$, and $Fe_2O_3$ contents can be measured according to JIS R 5202 "Chemical Analysis Method for Portland Cement" and/or JIS R 5 204 "X-ray Fluorescence Analysis Method for Cement."

As mentioned above, in the cement clinker of the present invention, the $C_3A$ and $C_4AF$ content in total is not less than 22 mass%. If this content is less than 22%, it becomes difficult to obtain cement clinker with good physical properties such as strength development with baking at lower temperatures. A more preferred total content of them is not less than 24 mass%. As described below, more than 60 mass% of $C_3S$ is required to obtain the high strength development property. Therefore, the maximum total content of $C_3A$ and $C_4AF$ is 40%. Preferably, it is not more than 35 mass%, more preferably not more than 32 mass%, and especially preferably not more than 28 mass%. It is preferred that $C_4AF$ is present alone at not less than 15 mass% in order to allow sufficient baking even at low temperatures and to reduce the content of f-CaO in the cement clinker.

The $C_3S$ content is extremely important for the strength development of cement compositions using the cement clinker of the present invention (hereinafter simply "cement"). If this amount is less than 60%, good strength development cannot be obtained even if the total content of $C_3A$ and $C_4AF$ and the iron modulus described below are within the specified range. The $C_3S$ content is preferably not less than 62 mass% and more preferably not less than 63 mass%. Since the total content of $C_3A$ and $C_4AF$ mentioned above is not less than 22 mass%, the upper limit of the $C_3S$ content is 78 mass%. In order to ensure adequate time from the start to the end of condensation, not more than 70 mass% is preferred, and not more than 65 mass% is more preferred.

The cement clinker of the present invention may further contain $C_2S$. It is preferred that the content of $C_2S$ is not more than 18 mass% and more preferably not more than 15 mass%, and preferably not less than 3 mass%. For obtaining long-term strength, the total content of $C_3S$ and $C_2S$ is especially preferred to be not less than 69 mass%.

The iron modulus (I.M.) of the cement clinker of the present invention is not more than 1.3. If the iron modulus exceeds 1.3, sufficient strength development (more specifically, for example, mortar strength development) cannot be obtained even if other requirements to the cement clinker are satisfied. Furthermore, when iron modulus exceeds 1.3, the time from the start of setting to the end tends to be too long. From this point of view, the iron modulus should be not more less 1.3. A more preferred iron modulus is 1.0 to 1.3, and especially preferred is 1.14 to 1.27.

The hydraulic modulus and silicon modulus are not particularly limited, but to achieve an excellent balance of various properties, the hydraulic modulus is preferably 1.8 to 2.2, particularly preferably 1.9 to 2.1, and the silicon modulus is preferably 1.0 to 2.0 and especially preferably 1.1 to 1.7.

The most important thing in the cement clinker is to have a BaO content of at least 0.05 mass% and below 0.7 mass%. The BaO content of the cement clinker can be measured using a general X-ray fluorescence analyzer, for example, by quantitative analysis such as a calibration curve method.

When cement clinker with the above composition is prepared with common raw materials, the cement clinker produced contains no or little BaO. In contrast, although the mechanism is not clear, adjusting the BaO content to one at least 0.05 mass% and less than 0.7 mass% results in the same ease of baking and strength development as low-temperature baked clinker that contains little BaO content. Cement clinker with BaO content less than 0.05 mass% does not contribute to the usage of wastes and byproducts having high BaO content. On the contrary, cement clinkers with BaO content not less than 0.7 mass% frequently have low baking characteristic and is not preferable. More preferred BaO content is 0.25 to 0.65 mass% and the most preferred one is 0.25 to 0.5 mass%, for effective use of wastes and byproducts having high BaO content, easy baking, and keeping good cement strength development properties.

The cement clinker of the present invention containing BaO in the above range exhibits easy baking and cement strength development comparable to that of low-temperature baked clinker containing little or no BaO.

The cement clinker of the present invention can be produced by baking at lower temperatures than conventional ordinary Portland cement clinker. Conventional ordinary Portland cement clinker requires a temperature of around 1450 degree Celsius for baking. In contrast, the cement clinker is baked at 1300 to 1400 degree Celsius, e.g., at not less than 1300 degree Celsius and less than 1400 degree Celsius, especially, at not less than 1300 degree Celsius and not more than 1380 degree Celsius.

The production method of the cement clinker of the present invention is not particularly limited. By preparing and mixing known cement clinker raw materials in predetermined proportions to achieve the above-mentioned respective mineral indices and moduli, and baking them by known methods (e.g. in SP kiln, NSP kiln, etc. ), the cement clinker of the present invention is easily obtained.

The preparation and mixing method of said cement raw materials may employ any known method. For example, the compositions of wastes, by-products, and other raw materials (CaO sources such as limestone, quicklime, and slaked lime, $SiO_2$ sources such as silica stone, $Al_2O_3$ sources such as clay, $Fe_2O_3$ sources such as copper calamite, titanium calamite, etc. ) are measured in advance, the content ratio of each material is calculated from the compositions of these materials to be in the above range, and the materials are prepared accordingly.

The raw materials used in the production of cement clinker are the same as those conventionally used in the production of cement clinker, without any particular restrictions. It is also possible to use waste materials, by-products, etc.

In the production of cement clinker, the use of one or more wastes, by-products, etc. is preferred from the viewpoint of promoting the effective use of wastes, by-products, etc. More specific examples of adequate wastes and by-products include blast furnace slag, steelmaking slag, nonferrous slags, coal ash, sewage sludge, water purification sludge, paper sludge, construction soil, casting sand, dust, incineration fly ash, molten fly ash, chlorine bypass dust, wood chips, waste white soil, bota, waste tires, shells, municipal waste and its incinerated ash, and others. (In addition, some of these can be used as raw materials for cement as well as a source of heat energy. )

The cement clinker of the present invention contains a large amount of $C_3A$ and $C_4AF$, minerals with $Al_2O_3$ as its constituent element. Therefore, it can be produced using more $Al_2O_3$-rich wastes and by-products than conventional cement clinker.

When the compound composition and various indices based on Bogue's formulae are adjusted using the above natural raw materials, wastes, and by-products, the BaO content of cement clinker after baking does not reach 0.05 mass%. Therefore, to adjust the BaO content of cement clinker, the BaO raw materials, in addition to the above-mentioned wastes, by-products, and natural raw materials, are analyzed and the amounts of raw materials is adjusted to achieve the prescribed BaO content. From the viewpoint of promoting effective utilization of wastes and by-products, it is preferable to use more wastes and by-products with high BaO contents for production than before. As the BaO source, Ba sulfate, Ba carbonate, Ba chloride, Ba hydroxide are usable. Industrial wastes and general wastes including Ba, and Barium-contaminated soil can be used, and specifically, cathode-ray tube panel glass and sewage sludge incinerated ash, etc. are usable.

However, slight discrepancies may occur depending on the clinker baking conditions, so the chemical composition of the clinker is ultimately determined by analyzing the clinker after baking.

The cement clinker of the present invention can be made into cement by mixing it with gypsum, for example by grinding the mixture or grinding them separately and then mixing, as is the case with the previously known cement clinker. Ordinary Portland cement, early-strength Portland cement, and ultra-early-strength Portland cement are examples of such cements. In addition to Portland cement, it can also be used as a component of various mixed cements and solidifiers such as soil solidifiers.

When gypsum is added to the cement composition, any gypsum known as a raw material for cement production, such as dihydrate gypsum, hemihydrate gypsum, and anhydrate gypsum, can be used without any particular restrictions. In the case of Portland cement, the amount of gypsum added preferably be such that the $SO_3$ content in the Portland cement is 1.5 to 5.0 mass%, and more preferably 1.8 to 3 mass% . For the method of grinding the above cement clinker and gypsum, known techniques can be used without any particular restrictions.

Blast furnace slag, siliceous admixture, fly ash, calcium carbonate, limestone, and other admixtures, and grinding aids may be added to the cement composition as appropriate and mixed and ground, or mixed with the mixing materials after grinding. Chlorine bypass dust, etc. may also be mixed.

The degree of grinding of the cement composition is not limited, but it is preferred that Blaine's specific surface area is adjusted to 2800-4500 cm$^2$/g.

If necessary, blast furnace slag, fly ash, etc. can be mixed with the cement after grinding to make blast furnace slag cement, fly ash cement, etc.

Embodiments

The following embodiments will illustrate the present invention and its advantageous effects, but the invention is not limited to these embodiments.

Comparative Examples 1 and 2 and Embodiments 1 and 2

Cement clinker raw materials were prepared using industrial raw materials including waste and the reagent class $BaCO_3$ and baked at 1360 degree Celsius for 100 minutes to obtain cement clinker. The chemical composition of the clinker obtained after baking is shown in Table 1, and the f-CaO, mineral composition by Bogue's formulae, moduli, and various indices are shown in Table 2. To 100 mass parts of the cement clinker, 2.2 mass parts of dihydrate gypsum and 1.8 mass parts of semi-hydrate gypsum were mixed and ground to produce cements with Blaine's specific surface area of $3200 \pm 50$ $cm^2$/g. The measurement results of mortar compressive strength for the cements are shown in Table 3.

The measurement methods are as follows.

(1) Measurement of chemical composition of cement clinker raw materials and cement clinker, other than BaO: Measured by X-ray fluorescence analysis method according to JIS R 5204.
(2) Measurement of BaO content of cement clinkers: Measured by quantitative analysis using a scanning X-ray fluorescence spectrometer (ZSX Primus 1V, Rigaku Corporation) with a calibration curve.
(3) Measurement of f-CaO: Measured in accordance with Standard Test Method I-01; Method of Determination of Free Calcium Oxide, the Cement Association of Japan.
(4) Mortar compressive strength: Measured in accordance with JIS R 5201.

Table1

| | Chemical Composition (%) | | | | | | | | | | | | |
|---|---|---|---|---|---|---|---|---|---|---|---|---|---|
| | BaO | $SiO_2$ | $Al_2O_3$ | $Fe_2O_3$ | CaO | MgO | $SO_3$ | $Na_2O$ | $K_2O$ | $TiO_2$ | $P_2O_5$ | SrO | Cl |
| Comp. 1 | 0.0 | 19.60 | 7.00 | 5.61 | 65.54 | 0.87 | 0.18 | 0.17 | 0.29 | 0.34 | 0.12 | 0.04 | 0 |
| Emb.1 | 0.31 | 19.66 | 7.06 | 5.59 | 65.41 | 0.89 | 0.15 | 0.17 | 0.31 | 0.35 | 0.13 | 0.04 | 0 |
| Emb.2 | 0.59 | 19.70 | 7.06 | 5.58 | 65.40 | 0.89 | 0.15 | 0.16 | 0.31 | 0.35 | 0.12 | 0.04 | 0 |
| Comp. 2 | 0.89 | 19.81 | 7.04 | 5.59 | 65.21 | 0.90 | 0.16 | 0.18 | 0.33 | 0.37 | 0.13 | 0.04 | 0 |

Table 2

| | f-CaO(%) | Mineral Composition by Bogue's Formulae | | | | Moduli- Indices | | |
|---|---|---|---|---|---|---|---|---|
| | | $C_3S$ | $C_2S$ | $C_3A$ | $C_4AF$ | H.M. | S.M. | I.M. |
| Comp. 1 | 0.66 | 63 | 9 | 9 | 17 | 2.03 | 1.55 | 1.25 |
| Emb.1 | 0.92 | 61 | 10 | 9 | 17 | 2.02 | 1.55 | 1.26 |
| Emb.2 | 0.96 | 61 | 11 | 9 | 17 | 2.02 | 1.56 | 1.27 |
| Comp. 2 | 1.22 | 60 | 12 | 9 | 17 | 2.01 | 1.57 | 1.26 |

**Table 3**

| | Mortar Compressive Strength (N/mm$^2$) | | |
|---|---|---|---|
| | day 3 | day 7 | day 28 |
| Comp. 1 | 28.8 | 42.1 | 58.3 |
| Emb. 1 | 29.5 | 42.6 | 58.7 |
| Emb. 2 | 28.7 | 41.5 | 58.0 |

Comparative Example 1 is a low-temperature baked clinker without BaO. The results of embodiments and comparison examples are evaluated based on the results of Comparative Example 1.

In Embodiments 1 and 2 according to the present invention, the BaO content was at least 0.05 mass% and less than 0.7 mass%. The f-CaO content was less than 1.00%, which has been considered to be the standard for easy baking of cement clinker in general, as in Comparative Example 1, indicating that easy baking is good. This indicates that the cement clinker has good ease of baking. The compressive strengths of the mortar at 3, 7, and 28 days were equivalent to those of Comparative Example 1. In particular, Embodiment 1 with a BaO content of 0.31 mass% had a large mortar compressive strength at all time points of 3 to 28 days and showed early mortar strength and high long-term strength.

Comparative Example 2 had a BaO content of 0.7 mass% or more and had a f-CaO value of 1.00 mass% or more and had an easy baking characteristic lower than in Comparative Example 1.

## Claims

1. A Portland cement clinker having a total content of $C_3A$ and $C_4AF$ of not less than 22 mass%; a $C_3S$ content of not less than 60 mass%, an iron modulus (I.M.) of not more than 1.3, calculated according to Bogue's formulae; and a BaO content of not less than 0.05 mass% and less than 0.7 mass%.

2. The Portland cement clinker according to claim 1, **characterized in that** the $C_4AF$ content is not less than 15 mass%.

3. The Portland cement clinker according to claim 1 or 2, **characterized in that** the total content of $C_3S$ and $C_2S$ is not less than 69 mass%.

4. The Portland cement clinker according to claim 1, **characterized in that** the total content of $C_3A$ and $C_4AF$ is not less than 22 mass% and not more than 32 mass%; the $C_3S$ content is not less than 60 mass% and not more than 70%; the $C_2S$ content is not less than 3% and not more than 18 mass%; the total content of $C_3A$, $C_4AF$, $C_3S$, and $C_2S$ is not more than 100 mass percent, and that
   the BaO content is not less than 0.25 mass% and not more than 0. 65 mass%.

5. A cement composition comprising the Portland cement clinker according to one of claims 1 to 4 and gypsum.

6. The cement composition according to claim 5, **characterized by** further comprising one or more member selected from the group consisting of blast furnace slag, siliceous admixture, fly ash, and limestone.

7. A production method of Portland cement clinker:

   mixing a CaO source; a $SiO_2$ source; an $Al_2O_3$ source; a $Fe_2O_3$ source; and a BaO source into a mixture such that the Portland cement clinker after baking has a composition, calculated according to Bogue's formulae, of a total content of $C_3A$ and $C_4AF$ of not less than 22 mass%, a $C_3S$ content of not less than 60 mass%, an iron modulus (I.M.) of not more than 1.3, and has a BaO content of not less than 0.05 mass% and less than 0.7 mass%; and baking the mixture at a temperature of not less than 1300 degree Celsius and less than 1400 degree Celsius.

8. The production method of Portland cement clinker according to claim 7, **characterized in that** the mixture is mixed such that the total content of $C_3A$ and $C_4AF$ is not less than 22 mass% and not more than 32 mass%; the $C_3S$ content is not less than 60 mass% and not more than 70 mass%; a $C_2S$ content of not less than 3 mass% and not more than 18 mass%; the total content of $C_3A$, $C_4AF$, $C_3S$, and $C_2S$ is not more than 100 mass percent and

   the BaO content is not less than 0.25 mass% and not more than 0. 65 mass%,
   and that
   the mixture is baked at a temperature of not less than 1300 degree Celsius and not more than 1380 degree Celsius.

**INTERNATIONAL SEARCH REPORT**

International application No.

**PCT/JP2023/010955**

| A. | CLASSIFICATION OF SUBJECT MATTER |
|---|---|

*C04B 7/02*(2006.01)i; *C04B 14/04*(2006.01)i; *C04B 14/28*(2006.01)i; *C04B 18/08*(2006.01)i; *C04B 18/14*(2006.01)i; *C04B 22/14*(2006.01)i; *C04B 28/04*(2006.01)i
FI:  C04B7/02; C04B28/04; C04B22/14 B; C04B18/14 A; C04B18/08 Z; C04B14/28; C04B14/04

According to International Patent Classification (IPC) or to both national classification and IPC

| B. | FIELDS SEARCHED |
|---|---|

Minimum documentation searched (classification system followed by classification symbols)

C04B7/02; C04B14/04; C04B14/28; C04B18/08; C04B18/14; C04B22/14; C04B28/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2012/144497 A1 (TOKUYAMA CORPORATION) 26 October 2012 (2012-10-26) claim 1, paragraph [0013] | 1-8 |
| Y | JP 2015-067490 A (TAIHEIYO CEMENT CORP) 13 April 2015 (2015-04-13) claim 1, paragraph [0023] | 1-8 |
| Y | JP 2011-079710 A (TAIHEIYO CEMENT CORP) 21 April 2011 (2011-04-21) claim 1, paragraph [0006] | 1-8 |
| A | JP 2016-190752 A (SUMITOMO OSAKA CEMENT CO LTD) 10 November 2016 (2016-11-10) paragraphs [0062], [0072] | 1-8 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/010955**

| Patent document cited in search report | | | Publication date (day/month/year) | Patent family member(s) | Publication date (day/month/year) |
|---|---|---|---|---|---|
| WO | 2012/144497 | A1 | 26 October 2012 | US 8864902 B2 claim 1, column 3, lines 27-32 | |
| JP | 2015-067490 | A | 13 April 2015 | (Family: none) | |
| JP | 2011-079710 | A | 21 April 2011 | (Family: none) | |
| JP | 2016-190752 | A | 10 November 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012224504 A
- JP 2004352515 A

**Non-patent literature cited in the description**

- **MUNEAKI KANAYA et al.** *Cement and Concrete*, 1999, vol. 53, 10-15